# EUROPEAN PATENT SPECIFICATION

(11) **EP 3 248 781 B1**
(45) Date of publication and mention of the grant of the patent: **03.07.2019**
(21) Application number: 17172967.6
(22) Date of filing: 25.05.2017
(51) Int. Cl.: B33Y 30/00, B29C 64/124, C09D 183/04, C09D 183/08, C08L 83/00

(54) **STEREOLITHOGRAPHIC MACHINE WITH NON-STICK GEL SYSTEM**
STEREOLITHOGRAPHISCHE MASCHINE MIT NICHTHAFTENDEM GELSYSTEM
MACHINE STÉRÉOLIGRAPHIQUE COMPORTANT UN SYSTÈME DE GEL NON COLLANT

(30) Priority: 27.05.2016 IT UA20163798
(43) Date of publication of application: 29.11.2017
(73) Proprietor: Sharebot S.r.l., 23895 Nibionno (IT)
(72) Inventor: BAR, Ettore Maria, 23895 NIBIONNO (IT); RADAELLI, Andrea, 23895 NIBIONNO (IT)
(74) Representative: Bergadano, Mirko

(56) References cited:
- WO-A1-2016/015176
- WO-A1-2016/172788
- US-A1- 2007 063 389

## Description

The present invention relates to methods and apparatuses for the manufacture of solid, semi-solid and elastomeric three-dimensional objects from initially liquid materials, through a physical state change of a chemical compound with the aim of obtaining a geometry that had been previously described in digital mode.

Conventional additive manufacturing techniques of three-dimensional objects are based on the manufacture of a three-dimensional object that is carried out in a gradual or layer-by-layer way. In particular, the layer formation is carried out by solidifying a liquid substance sensitive to the action of an energy radiation that gives rise to a chemical reaction resulting in the change of state. Two techniques are known: in the first one, new layers are formed on the upper surface of the growing object; in the other one, new layers are formed at the lower surface of the growing object.

If new layers are formed on the upper surface of the growing object, after each irradiation the object under construction is lowered into the tub containing the liquid substance, a new layer of substance is poured over the upper surface and a new cycle begins. A first example of this technique is given by C. Hull, U.S. Pat. No. US536637.

Further, US 2007/0063389 discloses an apparatus and a method for the separation of a hardened material layer from a flat construction plane.

One disadvantage of such top down techniques is the need to plunge the object in a tub (which must be at least as deep as the maximum height reached by the object under construction) containing a liquid substance and to continuously reconstitute a precise layer of liquid substance on the surface of the tub.

If new layers are formed at the bottom of the growing object, after each irradiation of the object under construction, the object must be detached from the bottom of the liquid-containing tub. While these bottom-up techniques can eliminate the need for a deep tub where the object is plunged, since they work by lifting the object from a relatively shallow tub, a problem with such "bottom-up" manufacturing techniques is the attention paid to the detachment of the three-dimensional object from the bottom of the tub. In fact, after the polymerization of a layer, forces such as the suction effect and physical and chemical interactions are created between the bottom of the tub and the polymerized substance.

In stereolithographic machines employing the "bottom-up" method, the three-dimensional object to be manufactured is formed on a support plane parallel to the bottom of the tub, said plane being motorized orthogonally to the bottom of the container.

After the solidification of each layer of the object, the support plane is moved relative to the container to leave a new layer of liquid substance between the object and the bottom of the tub and consequently allow the formation of a new layer of the object in contact with the previously solidified layer.

In fact, each layer of the three-dimensional object is formed by solidifying the layer of substance adjacent to the bottom of the container with the previously formed layer, or initially with the support plane.

An emitter designed to emit an energy beam, whose purpose is solidifying a single layer of sensitive liquid substance, is arranged under the tub containing the substance.

The solidification or polymerization is achieved by emitting an energy radiation from the underlying area of the container, which has a transparent bottom and rests on a support plate provided with a through opening. In this way, the bottom area of the container, namely the substance contained therein, is exposed to the action of the energy radiation.

Different methods can be applied to detach the polymerized layer from the bottom of the tub without spoiling the object under construction. Some of them provide mechanical systems, such as a tub motorization to perform a tilting movement, some others provide chemical/physical systems, thus coating the walls of the tub with materials such as PDMS (Polydimethylsiloxane) or FEP (Fluorinated Ethylene Propylene). In other cases, the two systems are used together, like in the patent WO2014037826A1, where a motorized tub handling system and an interface material arranged on the bottom thereof are applied.

These methods start a detachment process or a detachment-facilitating process that complicates the required machinery and slows down the construction of the three-dimensional object.

Consequently, there is a need for alternative methods and three-dimensional manufacturing apparatuses having more efficient detachment methods in bottom-up systems in order to improve and accelerate the process.

The object of the invention comprises a stereolithographic machine using a suitable gel for creating a detachable surface in the interference phase between a sensitive liquid substance and a surface exposed to the polymerizing energy radiation and the use of said gel.

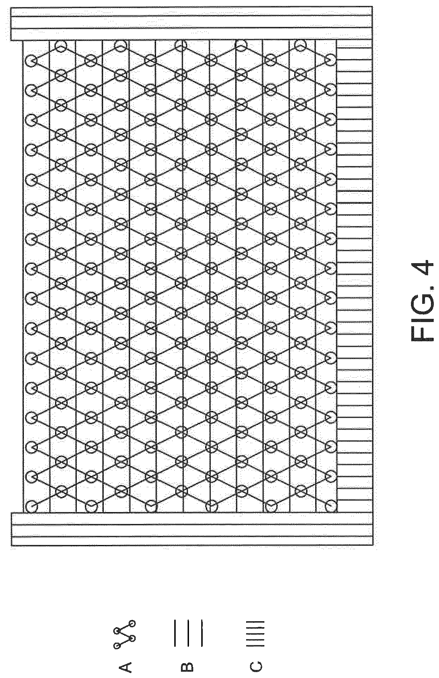

The aforesaid detachable gel shown in Figure 4 is made of a biphasic elastic colloidal material, in turn consisting of a liquid (material B) dispersed and embedded in the solid or matrix phase (material A).

The material A is made of a thermoplastic, thermosetting, photopolymerizing or solvent-based organic or inorganic matrix, capable of crosslinking and holding the material B inside it. Non-limiting examples may be protein or polymeric matrixes, polysaccharides, derivatives of silica and clay.

The material B is an organic or inorganic liquid phase with and without the ability to modify its viscosity relative to the temperature and with non-stick capacities relative to the liquid and/or polymerized substance. Non-limiting examples may be polymerized siloxanes, dimethichone and liquid fluorates or mixtures thereof.

The gel composed of material A and B must be permeable to the energy radiation polymerizing the sensitive liquid substance.

The gel composed of material A and B may also contain, in suspension, solution or emulsion, both terrestrial and extra-terrestrial materials capable of correcting or modifying the physical and chemical properties of the gel and its behaviour on exposure to energy radiation.

The adhesion of the detaching gel to the inner walls of the liquid-containing tub may be due to physical-mechanical interactions or chemical interactions between the gel and the walls forming the tub, or may occur thanks to the use of an adhesion promoter (material C) between the gel-composing material A and the tub walls. The material C may be totally permeable, partially permeable or impermeable to the polymerizing radiation.

Main differences with the used main coating systems, 0 min 5 max:

| | GEL | PDMS | FEP |
|---|---|---|---|
| Tub duration | 4 | 2 | 5 |
| Ease of detachment of the piece | 5 | 4 | 3 |
| Opacification over time | 1 | 5 | 0 |
| High speed print | 5 | 0 | 0 |
| Ease of detachment of large pieces (surfaces larger than 20cm2) | 5 | 3 | 0 |
| Transparency polymerizing radiation | 5 | 5 | 4 |

The comparative table shows how the use of a gel containing detachment agents gives better characteristics to the stereolithographic machine using it if compared to the commonly used coating systems.

The foregoing objects and advantages are illustrated in the description of the invention, which is provided by way of non-limiting example with reference to the accompanying drawings, in which:
Figure 1 shows an axonometric view of the stereolithographic machine object of the invention;
Figure 2 shows an assonometric view of the gel-coated tub;
Figure 3 shows in detail a section of the container of Figure 2;
Figure 4 shows a detail of the composition of the macrostructures of the A, B and C materials composing the gel and the adhesion promoter;
   - Figure 5 shows a side section of the stereolithographic machine of Figure 1 illustrating the sensitive liquid substance and the three-dimensional object to be manufactured.

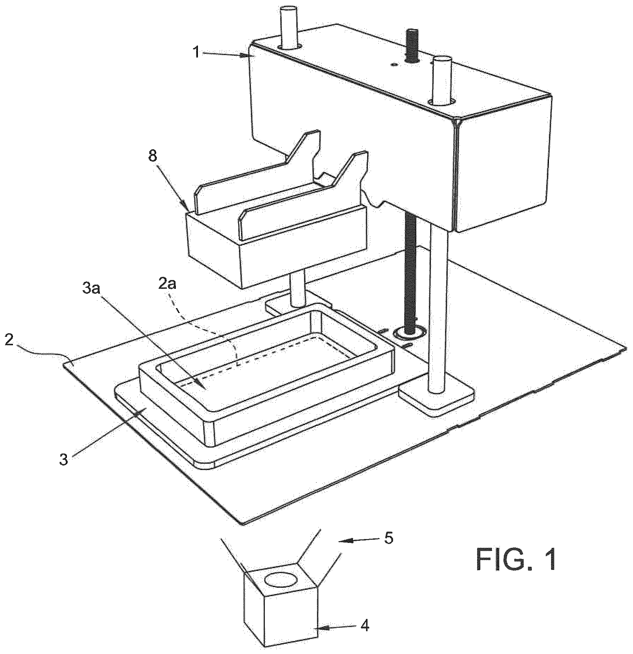

The stereolithographic machine as generally shown in Figure 1 comprises a support plate 2 supporting a container 3 containing a liquid substance having a viscosity suitable for the stereolithographic process.

The emitter 4 arranged under the support plate 2 sends an energy radiation 5 to the container 3 to obtain a selective solidification of the liquid substance contained therein.

Preferably but not necessarily, said liquid substance is a photosensitive resin suitable for polymerization when excited by a specific radiation 5.

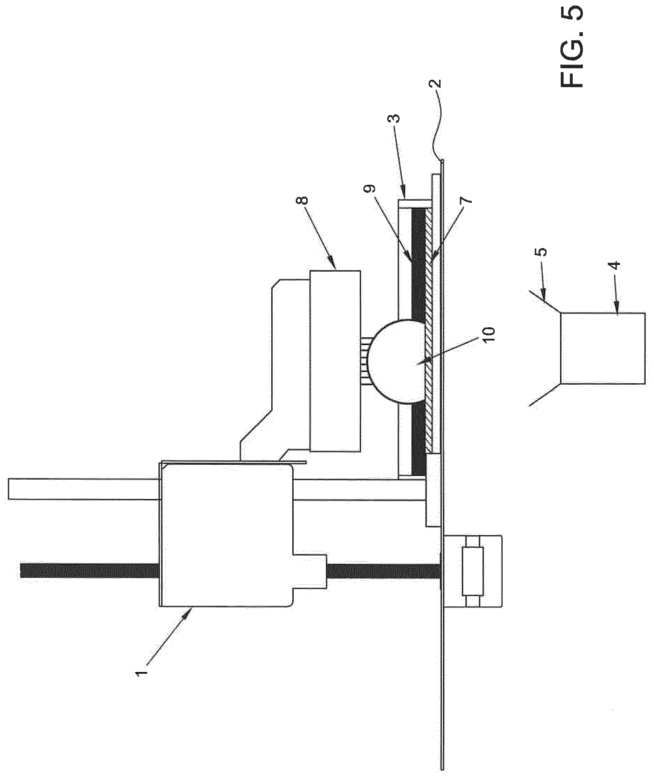

The invention is particularly suitable for stereolithographic machines like the one in Figure 1, where the layer of substance adjacent to the bottom 3a of the container 3 is subjected to excitation. The photosensitive resin 9 is contained in the tub 3 in Figure 5.

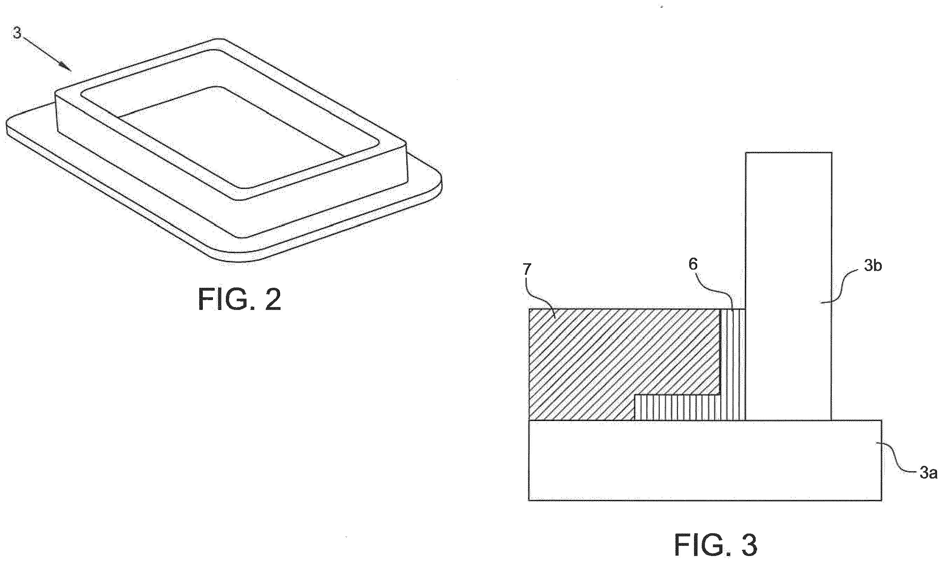

The bottom 3a of the container 3 is transparent and permeable to the energy radiation. The support plate 2 is provided with a through opening 2a facing the bottom 3a, through which the energy radiation can reach the bottom 3a and consequently the photosensitive resin. Figure 2 shows an axonometric view of the tub 3, whose section is shown in Figure 3. Figure 3 shows a section of the tub 3. It is formed by the plane of the container 3a made of transparent methacrylate and having a variable thickness, by a layer of adhesion promoter 6, formed by a mixture of a trimethoxyvinyl silane-based adhesive and chloroform, covering a variable part of the bottom of the tub 3a and the shoulder of the tub 3b, having a variable thickness. In Figure 3, the non-stick gel layer 7 is formed by a polymeric matrix in polymethylsiloxane and by a liquid fraction consisting of a mixture of dimethicone at 350cS and dimethicone at 500cS in varying amounts. The mixture of the various components of the liquid fraction gives the non-stick gel 7 the ability of a correlated response between the temperature and the viscosity of the liquid phase. The photosensitive resin polymerization reactions may be exothermic, and in this case a decrease in viscosity of the liquid phase is guaranteed only at the polymerisation points, resulting in a topical release of the detachment agent on the gel surface adjacent to the irradiated resin layer. This feature can increase the non-stick capacity of the gel over time and helps preserve the solid matrix from opacification over time. The non-stick gel layer 7 may have variable thickness. The stereolithographic machine in Figure 1 further comprises a printing plane 8 for supporting the three-dimensional object 10 to be manufactured (Figure 5). The stereolithographic machine in Figure 1 comprises the support frame 1 for moving the plane 8 in a direction of movement Z orthogonal to the support plate 2.

## Claims

1. A stereolithographic machine comprising:
- a printing plane (8);
- emitter means (4) for emitting an energy radiation (5) to a container (3); and
- the container (3) with a transparent bottom (3a) permeable to the energy radiation (5) for containing a liquid and internally coated with a gel layer; **characterized in** the gel consisting of a first material (A) made of a solid or matrix phase and of a second biphasic elastic colloidal material (B), in turn made of a liquid and dispersed and embedded in the first material (A).

2. The stereolithographic machine according to claim 1, **characterized by** a gel consisting of a solid matrix holding a liquid phase with a non-stick action against a radiation-sensitive substance in a liquid or polymerized phase.

3. The stereolithographic machine according to claim 2, wherein the non-stick gel adheres to the container (3) by means of an adhesion promoter (C).

4. The stereolithographic machine according to any one of the preceding claims, wherein the emitter means (4) send a radiation to a bottom (3a) of the container (3), the stereolithographic machine preferably being of the bottom-up type.

5. The stereolithographic machine according to any one of the preceding claims, wherein the printing plane (8) can support a three-dimensional object (10) to be manufactured; and the stereolithographic machine comprises a support frame (1) for moving the printing plane (8) in a direction of movement (Z) orthogonal to the support plate (2).

6. The stereolithographic machine according to any one of the preceding claims, comprising a support plate (2) supporting the container (3), wherein the emitter means (4) are arranged under the support plate (2) and, in use, emit an energy radiation (5) to the container (3) to obtain a selective solidification of the liquid substance contained therein.

7. The stereolithographic machine according to claim 1, wherein the first material (A) is formed by an organic matrix for crosslinking and holding the second material (B) inside it, the first material (A) preferably being a polymeric matrix.

8. The stereolithographic machine according to claim 1 or 7, wherein the second material (B) has non-stick capacities relative to the liquid substance, which is polymerizable or polymerized by an energy radiation, the second material (B) is preferably a polymerizing siloxane or dimethichone or liquid fluorates or mixtures of said materials.

9. The stereolithographic machine according to any one of claims 1 to 8, wherein the gel is permeable to the energy radiation polymerizing a sensitive liquid substance.

10. The stereolithographic machine according to any one of claims 1 to 9, wherein the first material (A) is a polymeric matrix in polymethylsiloxane and the second material (B) is a liquid fraction consisting of a mixture of dimethicone at 350 cS and dimethicone at 500 cS in varying amounts.

11. The stereolithographic machine according to claim 1, wherein the container (3) comprises an adhesion promoter (C) between the first material (A) of the gel and the walls of the container (3) to allow the gel adhesion to the inner wall of the container (3) containing the sensitive liquid substance, the adhesion promoter (C) being preferably formed by a mixture of a trimethoxyvinyl silane-based adhesive and chloroform.

12. Use of a gel in a stereolithographic machine;
the gel for a stereolithographic machine consisting of a first material (A) made of a solid or matrix phase and of a second biphasic elastic colloidal material (B), in turn made of a liquid and dispersed and embedded in the first material (A);
the stereolithographic machine comprising:
- a printing plane (8);
- emitter means (4) for emitting an energy radiation (5) to a container (3); and
- the container (3) with a transparent bottom (3a) permeable to the energy radiation (5) for containing a liquid and internally coated with a layer of the gel.

13. The use of a gel according to claim 12, wherein the first material (A) is formed by an organic matrix for crosslinking and holding the second material (B) inside it, the first material (A) preferably being a polymeric matrix.

14. The use of a gel according to claim 12 or 13, wherein the second material (B) has non-stick capacities relative to the liquid substance, which is polymerizable or polymerized by an energy radiation, the second material (B) is preferably a polymerizing siloxane or dimethichone or liquid fluorates or mixtures of said materials.

15. The use of a gel according to any one of claims 12 to 14, wherein the gel is permeable to the energy radiation polymerizing a sensitive liquid substance.

16. The use of a gel according to any one of claims 12 to 15, wherein the first material (A) is a polymeric matrix in polymethylsiloxane and the second material (B) is a liquid fraction consisting of a mixture of dimethicone at 350 cS and dimethicone at 500 cS in varying amounts.

17. The use of a gel according to any one of claims 12 to 16, wherein the photosensitive resin polymerization reactions are exothermic to ensure a decrease in viscosity of the liquid phase only at the polymerisation points, resulting in a topical release of the detachment agent on the gel surface adjacent to the irradiated resin layer.

## Patentansprüche

1. Stereolithografische Vorrichtung, die aufweist:
- eine Druckebene (8),
- Emittierungseinrichtungselemente (4) zum Emittieren einer Energiestrahlung (5) zu einem Behälter (3), und
- den Behälter (3) mit einem durchsichtigen Boden (3a), der für die Energiestrahlung (5) durchlässig ist, zum Enthalten einer Flüssigkeit und der innen mit einer Gelschicht beschichtet ist, **dadurch gekennzeichnet, dass** das Gel ein erstes Material (A), das aus einer festen Phase oder Matrixphase gemacht ist, und ein zweites zweiphasiges elastisches kolloidales Material (B), das wiederum aus einer Flüssigkeit gemacht ist und bei dem ersten Material (A) eingebettet ist, umfasst.

2. Stereolithografische Vorrichtung nach Anspruch 1, die durch ein Gel gekennzeichnet ist, das eine feste Matrix, die eine flüssige Phase mit einer Nicht-Haft-Wirkung gegen eine strahlungsempfindliche Substanz in einer flüssigen oder polymerisierten Phase hält, umfasst.

3. Stereolithografische Vorrichtung nach Anspruch 2, wobei das Nicht-Haft-Gel mithilfe eines Adhäsionsbeschleunigers (C) an dem Behälter (3) klebt.

4. Stereolithografische Vorrichtung nach einem der vorigen Ansprüche, wobei die Emittierungseinrichtungselemente (4) eine Strahlung zu einem Boden (3a) des Behälters (3) senden, wobei die stereolithografische Vorrichtung bevorzugt die von-untennach-oben Art ist.

5. Stereolithografische Vorrichtung nach einem der vorigen Ansprüche, wobei die Druckebene (8) ein dreidimensionales Objekt (10), das hergestellt werden soll, tragen kann, und die stereolithografische Vorrichtung einen Tragrahmen (1) zum Bewegen der Druckebene (8) in einer Bewegungsrichtung (Z), die zu der Tragplatte (2) orthogonal ist, aufweist.

6. Stereolithografische Vorrichtung nach einem der vorigen Ansprüche, die eine Tragplatte (2), die den Behälter (3) trägt, aufweist, wobei die Emittierungseinrichtungselemente (4) unter der Tragplatte (2) angeordnet sind und bei Verwendung eine Energiestrahlung (5) zu dem Behälter (3) emittieren, um eine selektive Verfestigung der flüssigen Substanz, die darin enthalten ist, zu erhalten.

7. Stereolithografische Vorrichtung nach Anspruch 1, wobei das erste Material (A) durch eine organische Matrix zum Vernetzen und Halten des zweiten Materials (B) im seinem Inneren gebildet ist, wobei das erste Material (A) bevorzugt eine Polymermatrix ist.

8. Stereolithografische Vorrichtung nach Anspruch 1 oder 7, wobei das zweite Material (B) nicht-Haft-Eigenschaften bezüglich der flüssigen Substanz, die durch eine Energiestrahlung polymerisierbar ist oder durch diese polymerisiert ist, hat, wobei das zweite Material (B) bevorzugt ein polymerisierendes Siloxan oder Dimeticon oder flüssiges Fluorat oder Mischungen dieser Materialien ist.

9. Stereolithografische Vorrichtung nach einem der Ansprüche 1 bis 8, wobei das Gel für die Energiestrahlung, die eine empfindliche flüssige Substanz polymerisiert, durchlässig ist.

10. Stereolithografische Vorrichtung nach einem der Ansprüche 1 bis 9, wobei das erste Material (A) eine Polymermatrix in Polymethylsiloxan ist und das zweite Material (B) eine flüssige Fraktion, die ein Gemisch von Dimeticon mit 350 cS und Dimeticon mit 500 cS in verschiedenen Mengen umfasst, ist.

11. Stereolithografische Vorrichtung nach Anspruch 1, wobei der Behälter (3) einen Adhäsionsbeschleuniger (C) zwischen dem ersten Material (A) des Gels und den Wänden des Behälters (3) aufweist, um dem Gel eine Adhäsion an der inneren Wand des Behälters (3), der die empfindliche flüssige Substanz enthält, zu ermöglichen, wobei der Adhäsionsbeschleuniger (C) bevorzugt durch eine Mischung von Trimethoxyvinylsilan-basiertem Klebstoff und Chloroform gebildet ist.

12. Verwendung eines Gels bei einer stereolithografischen Vorrichtung,
wobei das Gel für eine stereolithografische Vorrichtung ein erstes Material (A), das aus einer festen Phase oder Matrixphase gefertigt ist, und ein zweites zweiphasiges elastisches kolloidales Material (B), das wiederum aus einer Flüssigkeit gemacht ist und bei dem ersten Material (A) eingebettet ist, umfasst,
wobei die stereolithografische Vorrichtung aufweist:
- eine Druckebene (8),
- Emittierungseinrichtungselemente (4) zum Emittieren einer Energiestrahlung (5) zu einem Behälter (3), und
- den Behälter (3) mit einem durchsichtigen Boden (3a), der für die Energiestrahlung (5) durchlässig ist, zum Enthalten einer Flüssigkeit und inneren Beschichtet-sein mit einer Gelschicht.

13. Verwendung eines Gels nach Anspruch 12, wobei das erste Material (A) durch eine organische Matrix zum Vernetzen und Halten des zweiten Materials (B) im seinem Inneren gebildet ist, wobei das erste Material (A) bevorzugt eine Polymermatrix ist.

14. Verwendung eines Gels nach einem der Ansprüche 12 oder 13, wobei das zweite Material (B) Nicht-Haft-Eigenschaften bezüglich der flüssigen Substanz, die durch eine Energiestrahlung polymerisierbar ist oder durch diese polymerisiert ist, hat, wobei das zweite Material (B) bevorzugt ein polymerisierendes Siloxan oder Dimeticon oder flüssiges Fluorat oder Mischungen dieser Materialien ist.

15. Verwendung eines Gels nach einem der Ansprüche 12 bis 14, wobei das Gel für die Energiestrahlung, die eine empfindliche flüssige Substanz polymerisiert, durchlässig ist.

16. Verwendung eines Gels nach einem der Ansprüche 12 bis 15, wobei das erste Material (A) eine Polymermatrix in Polymethylsiloxan ist und das zweite Material (B) eine flüssige Fraktion, die ein Gemisch von Dimeticon mit 350 cS und Dimeticon mit 500 cS in verschiedenen Mengen umfasst, ist.

17. Verwendung eines Gels nach einem der Ansprüche 12 bis 16, wobei die lichtempfindlichen Harzpolymerisationsreaktionen exotherm sind, um eine Verringerung der Viskosität der flüssigen Phase nur an den Polymerisationspunkten sicherzustellen, was zu einer topischen Freigabe des Trennmittels an der Gelfläche, die zu der bestrahlten Harzschicht benachbart ist, führt.

## Revendications

1. Appareil stéréolithographique comprenant :
- un plan d'impression (8) ;
- des moyens d'émission (4) destinés à émettre un rayonnement d'énergie (5) vers un récipient (3) ; et
- le récipient (3) comportant un fond transparent (3a) perméable au rayonnement d'énergie (5) pour contenir un liquide et revêtu intérieurement d'une couche de gel ; **caractérisé en ce que** le gel est constitué d'un premier matériau (A) formé d'une phase solide ou matricielle et d'un deuxième matériau colloïdal, élastique et diphasique (B), lui-même constitué d'un liquide et dispersé et noyé dans le premier matériau (A).

2. Appareil stéréolithographique selon la revendication 1, **caractérisé par** un gel constitué d'une matrice solide portant une phase liquide présentant une action antiadhésive contre une substance sensible aux radiations dans une phase liquide ou polymérisée.

3. Appareil stéréolithographique selon la revendication 2, dans lequel le gel antiadhésif adhère au récipient (3) au moyen d'un promoteur d'adhérence (C).

4. Appareil stéréolithographique selon l'une quelconque des revendications précédentes, dans lequel les moyens d'émission (4) émettent un rayonnement vers le fond (3a) du récipient (3), l'appareil stéréolithographique étant de préférence du type de bas en haut.

5. Appareil stéréolithographique selon l'une quelconque des revendications précédentes, dans lequel le plan d'impression (8) peut supporter un objet tridimensionnel (10) à fabriquer ; et l'appareil stéréolithographique comprend un cadre de support (1) destiné à déplacer le plan d'impression (8) dans une direction de mouvement (Z) orthogonale à la plaque de support (2).

6. Appareil stéréolithographique selon l'une quelconque des revendications précédentes, comprenant une plaque de support (2) supportant le récipient (3), dans lequel les moyens d'émission (4) sont disposés sous la plaque de support (2) et émettent, lors de l'utilisation, un rayonnement d'énergie (5) vers le récipient (3) pour obtenir une solidification sélective de la substance liquide qu'il contient.

7. Appareil stéréolithographique selon la revendication 1, dans lequel le premier matériau (A) est formé par une matrice organique destinée à la réticulation et au maintien du deuxième matériau (B) à l'intérieur de celui-ci, le premier matériau (A) étant de préférence une matrice polymère.

8. Appareil stéréolithographique selon la revendication 1 ou 7, dans lequel le deuxième matériau (B) a des capacités antiadhésives par rapport à la substance liquide, qui est polymérisable ou polymérisée par un rayonnement d'énergie, le deuxième matériau (B) est de préférence un siloxane ou une diméthichone ou des fluorates liquides de polymérisation ou des mélanges de ces matériaux.

9. Appareil stéréolithographique selon l'une quelconque des revendications 1 à 8, dans lequel le gel est perméable au rayonnement d'énergie polymérisant une substance liquide sensible.

10. Appareil stéréolithographique selon l'une quelconque des revendications 1 à 9, dans lequel le premier matériau (A) est une matrice polymère en polyméthylsiloxane et le deuxième matériau (B) est une fraction liquide constituée d'un mélange de diméthicone à 350 cS et de diméthicone à 500 cS dans des quantités variables.

11. Appareil stéréolithographique selon la revendication 1, dans lequel le récipient (3) comprend un promoteur d'adhérence (C) entre le premier matériau (A) du gel et les parois du récipient (3) pour permettre l'adhérence du gel à la paroi intérieure du récipient (3) contenant la substance liquide sensible, le promoteur d'adhérence (C) étant de préférence formé par un mélange d'un adhésif à base de triméthoxyvinyl silane et de chloroforme.

12. Utilisation d'un gel dans un appareil stéréolithographique ;
le gel destiné à un appareil stéréolithographique étant constitué d'un premier matériau (A) formé d'une phase solide ou matricielle et d'un deuxième matériau colloïdal, élastique et diphasique (B), lui-même formé d'un liquide et dispersé et noyé dans le premier matériau (A) ;
l'appareil stéréolithographique comprenant :
- un plan d'impression (8) ;
- des moyens d'émission (4) destiné à émettre un rayonnement d'énergie (5) vers un récipient (3) ; et
- le récipient (3) comportant un fond transparent (3a) perméable au rayonnement d'énergie (5) pour contenir un liquide et revêtu intérieurement d'une couche du gel.

13. Utilisation d'un gel selon la revendication 12, dans lequel le premier matériau (A) est formé par une matrice organique destinée à la réticulation et au maintien du deuxième matériau (B) à l'intérieur de celui-ci, le premier matériau (A) étant de préférence une matrice polymère.

14. Utilisation d'un gel selon la revendication 12 ou 13, dans lequel le deuxième matériau (B) a des capacités antiadhésives par rapport à la substance liquide, qui est polymérisable ou polymérisée par un rayonnement énergétique, le deuxième matériau (B) est de préférence un siloxane ou une diméthichone ou des fluorates liquides de polymérisation ou des mélanges de ces matériaux.

15. Utilisation d'un gel selon l'une quelconque des revendications 12 à 14, dans lequel le gel est perméable au rayonnement d'énergie polymérisant une substance liquide sensible.

16. Utilisation d'un gel selon l'une quelconque des revendications 12 à 15, dans lequel le premier matériau (A) est une matrice polymère en polyméthylsiloxane et le deuxième matériau (B) est une fraction liquide constituée d'un mélange de diméthicone à 350 cS et de diméthicone à 500 cS dans des quantités variables.

17. Utilisation d'un gel selon l'une quelconque des revendications 12 à 16, dans lequel les réactions de polymérisation de résine photosensible sont exothermiques pour assurer une diminution de la viscosité de la phase liquide uniquement aux points de polymérisation, ce qi conduit à une libération topique de l'agent de détachement sur la surface du gel adjacente à la couche de résine irradiée.
